# EUROPÄISCHE PATENTSCHRIFT

(11) **EP 2 004 990 B1**
(45) Veröffentlichungstag und Bekanntmachung des Hinweises auf die Patenterteilung: **15.05.2013**
(21) Anmeldenummer: 07723681.8
(22) Anmeldetag: 28.03.2007
(51) Int. Cl.: F03D 1/06

(54) **ROTORBLATT EINER WINDENERGIEANLAGE**
ROTOR BLADE OF A WIND ENERGY UNIT
PALE DE ROTOR D'UN DISPOSITIF D'ÉNERGIE ÉOLIENNE

(30) Priorität: 13.04.2006 DE 102006017897
(43) Veröffentlichungstag der Anmeldung: 24.12.2008
(73) Patentinhaber: REpower Systems SE, 22297 Hamburg (DE)
(72) Erfinder: PETSCHE, Marc, 24809 Nübbel (DE); BENDEL, Urs, 24787 Fockbek (DE)
(74) Vertreter: Grebner, Christian Georg Rudolf
(86) Internationale Anmeldenummer: PCT/EP2007/002735
(87) Internationale Veröffentlichungsnummer: WO 2007/118581

(56) Entgegenhaltungen:
- EP-A- 1 112 928
- WO-A-02/38442
- WO-A-2004/097215
- WO-A-2004/099608
- WO-A1-02/08600
- DK-U3- 9 500 009
- US-A1- 2007 025 858
- PETER FUGLSANG ET AL: "Development of the Riso wind turbine airfoils" WIND ENERGY, WILEY, CHICHESTER, GB, Bd. 7, Nr. 2, 24. Mai 2004 (2004-05-24), Seiten 145-162, XP002436915 ISSN: 1099-1824
- JACKSON, K.J.; ZUTECK, M.D.; VAN DAM, C.P.; STANDISH, K.J.; BERRY, D.: "Innovative design approaches for large wind turbine blades" WIND ENERGY, Bd. 8, Nr. 2, April 2005 (2005-04), Seiten 141-171, XP002440739 WILEY

## Beschreibung

Die Erfindung betrifft ein Rotorblatt einer Windenergieanlage mit einer Oberseite (Saugseite) und einer Unterseite (Druckseite), wobei entlang einer Längsachse zwischen einer Rotorblattwurzel und einer Rotorblattspitze Profile im Querschnitt mit einer Vorderkante und einer Hinterkante ausgebildet sind, für jedes Profil jeweils eine Auslegungsanströmrichtung vorbestimmt ist und die Profile im äußeren, der Rotorblattspitze zugewandten Bereich mit einer relativen Dicke von weniger als 30 % ausgebildet sind. Darüber hinaus betrifft die Erfindung eine Windenergieanlage sowie eine Verwendung einer Aufsatzvorrichtung. Überdies betrifft die Erfindung ein Verfahren zur Herstellung eines Rotorblatts einer Windenergieanlage.

Der Wirkungsgrad von Rotorblättern einer Windenergieanlage wird durch den Anströmwinkel, also den Winkel zwischen der Rotorblattprofilsehne und der Anströmrichtung der Luft, bestimmt. Bei Windenergieanlagen hängt insbesondere der Anströmwinkel von der Rotorblattgeschwindigkeit und somit von der Rotordrehzahl und der Windgeschwindigkeit ab.

Damit sich bei einem aerodynamischen Auftrieb eines Rotorblatts die Auftriebskraft voll entfalten kann, muss die Strömung des Windes möglichst lange am Profil des Rotorblatts anliegen. Hierbei sollte das Rotorblatt immer unter einem günstigen Winkel angeströmt werden. Die Größe und der Winkel der Anströmgeschwindigkeit ändern sich hierbei in Abhängigkeit der Windgeschwindigkeit und der Umlaufgeschwindigkeit im jeweiligen Punkt eines Rotorblatts. Dadurch, dass die Umfangsgeschwindigkeit an der Rotorblattspitze am größten ist und zur Rotornabe hin abnimmt, ergibt sich daraus eine Zunahme des Anströmwinkels relativ zur Rotorebene von der Blattspitze in Richtung Nabe. Um zu gewährleisten, dass das Rotorblatt an jedem Punkt optimal angeströmt wird, werden die Rotorblätter mit einer Verwindung ausgeführt.

Rotorblätter einer Windenergieanlage sind in DE-A-198 15 519 und DE-A-10 2004 007 487 beschrieben. Ein weiteres Rotorblatt einer Windturbine ist in WO-A-2002/008600 offenbart.

In WO-A-2004/097215 ist ein Rotorblatt einer Windenergieanlage offenbart, wobei das Rotorblatt eine Dickenrücklage etwa im Bereich von 15% bis 40% aufweist und wobei die größte Profildicke etwa 20% bis 45% beträgt.

Darüber hinaus ist in DK-U-9 500 009 ein aerodynamische Profil eines Rotorblatts einer Windenergieanlage beschrieben, wobei auf der Druckseite des Profils an der Hinterkante ein Abweiskörper angeordnet ist.

Ausgehend von diesem Stand der Technik besteht die Aufgabe der vorliegenden Erfindung darin, ein Rotorblatt einer Windenergieanlage bereit zu stellen sowie den Betrieb einer Windenergieanlage zu verbessern, wodurch beim Einsatz eines derartigen Rotorblatts der Energieertrag an einer Windenergieanlage optimiert bzw. erhöht wird.

Gelöst wird diese Aufgabe bei einem Rotorblatt der eingangs genannten Art dadurch, dass entlang der Längsachse im inneren, der Rotorblattwurzel zugeordneten Bereich an Profilen mit einer relativen Dicke von mehr als 30 % auf der Druckseite eine Aufsatzvorrichtung angeordnet ist, die eine Aufsatzanströmfläche sowie einen der Vorderkante zugewandten Aufpunkt der Aufsatzanströmfläche und einen der Hinterkante zugewandten Endpunkt der Aufsatzanströmfläche aufweist, wobei der Aufpunkt der Aufsatzanströmfläche in einem Bereich zwischen der Vorderkante und der Hinterkante der Profile angeordnet ist, so dass die Tangente an das Profil im Aufpunkt in einem Winkelbereich zwischen +20° und -20°, insbesondere zwischen +15° und -15°, zur Auslegungsanströmrichtung des Profils ausgebildet ist.

Die Erfindung beruht auf dem Gedanken, dass ein Rotorblattprofil im inneren Bereich, d.h. mit einer größeren relativen Dicke von mehr als 30 %, insbesondere mehr als 50 % relativer Dicke, durch eine zusätzlich ausgebildete Anströmfläche bzw. Aufsatzanströmfläche durch die Aufsatzvorrichtung auf der Druckseite des Rotorblatts eine optimierte aerodynamische Ausbildung erhält. Durch die zusätzlich ausgebildete Anströmfläche, die beispielsweise nachträglich nach Fertigung eines kompletten Rotorblatts auf eine bevorzugte Stelle im inneren Bereich des Rotorblatts aufgebracht wird, wird eine Art Wölbungserhöhung an den bevorzugten Profilen des Rotorblatts ausgebildet, die zu einer Auftriebserhöhung führt.

Unter der relativen Dicke eines Rotorblattprofils wird im Allgemeinen das Verhältnis der (größten) Profildicke zur Sehnenlänge des Profils verstanden.

Bei dickeren Profilen, bei denen üblicherweise die Strömung des Windes auf der Druckseite im Rotornaben nahen Bereich abzulösen droht, werden die Aufpunkte der Aufsatzvorrichtung in einem Bereich der Profilkontur angeordnet, bei denen die Berührenden bzw. die Tangenten im jeweiligen Aufpunkt in etwa parallel zur Anströmrichtung bzw. zur (vorbestimmten) Auslegungsanströmrichtung liegen bzw. ausgebildet sind. Dadurch sind die Aufpunkte der erfindungsgemäßen Aufsatzvorrichtung auf der Druckseite des Rotorblattprofils im inneren Bereich bei relativen Profildicken von mehr als 30 %, vorzugsweise mehr als 50 %, bestimmt bzw. gekennzeichnet. Hierbei ist eine Toleranz von etwa ± 20° zwischen der Berührenden im Aufpunkt an das Profil und der Auslegungsanströmrichtung von Vorteil bzw. möglich. Typischerweise liegen die Profile im inneren Bereich mit einer relativen Dicke von mehr als 50 % vor.

Gemäß der Erfindung weisen die Rotorblattprofile (als Primärprofile) im Innenbereich, der in seiner Konstruktion und bei der Fertigung sehr aufwändig ist, mit der ausgebildeten bzw. angeordneten Aufsatzanströmfläche der Aufsatzvorrichtung eine Art Sekundärprofile auf, so dass die Zunahme des Anströmwinkels im Rotornaben nahen Bereich durch die zusätzlich ausgebildete Anströmfläche berücksichtigt wird und der Energieertrag damit gesteigert wird.

Beim Übergang zwischen der druckseitigen Strömungsfläche des Rotorblatts und der anschließenden Anströmfläche der Aufsatzvorrichtung ist nach wie vor eine anliegende Strömung des Mediums bzw. Winds vorgesehen.

Mit der erfindungsgemäßen Aufsatzvorrichtung werden die aerodynamischen Profileigenschaften eines Rotorblatts im Hinblick auf einen verbesserten Energieertrag (im jährlichen Mittel) verbessert. Gemäß der Erfindung wird der Profilauftrieb von inneren Profilschnitten für relative Profildicken von 100 % bis 30 % effektiv erhöht. Dadurch, dass die Aufsatzvorrichtung vor dem Ablösepunkt der Strömung am Profil bezogen auf die Vorderkante des Profils angeordnet ist, wird die Leistung eines Rotors im Jahresmittel bis zu 3,0 % gesteigert.

Eine bevorzugte Ausführungsform des Rotorblatts besteht darin, dass entlang der Längsachse im inneren, der Rotorblattwurzel zugeordneten Bereich an Profilen mit einer relativen Dicke von mehr als 30 % auf der Druckseite eine Aufsatzvorrichtung, die eine Aufsatzanströmfläche sowie einen der Vorderkante zugewandten Aufpunkt der Aufsatzanströmfläche und einen der Hinterkante zugewandten Endpunkt der Aufsatzanströmfläche aufweist, angeordnet ist, wobei der Aufpunkt der Aufsatzanströmfläche vor dem Ablösepunkt der Windströmung auf der Druckseite bzw. vor dem Ablösepunkt des das Rotorblatt anströmenden Mediums auf der Druckseite ausgebildet ist. Hierdurch wird ein Strömungsabriss im zentrumsnahen Bereich des Rotorblatts auf der Druckseite vermieden oder zumindest stromabwärts verschoben.

Gemäß der Erfindung liegt bei einer vorbestimmten Auslegungsschnelllaufzahl eine so genannte Auslegungsanströmrichtung vor, die für jedes Querschnittsprofil des Rotorblatts unterschiedlich ausgebildet ist. Die Schnelllaufzahl λ eines Rotorblatts bzw. einer Windenergieanlage ist eine wichtige Kennzahl für die Auslegung von Windenergieanlagen. Sie gibt das Verhältnis der Umfangsgeschwindigkeit des Rotors (Blattspitzengeschwindigkeit) zur Windgeschwindigkeit an. Die Schnelllaufzahl gibt an, wie schnell sich die Flügel in Relation zum Wind bewegen.

Grundsätzlich verändern sich während des Betriebs einer Windenergieanlage die Schnelllaufzahlen in Folge der Windgeschwindigkeit und der Rotordrehzahl. Bei der Auslegungsschnelllaufzahl erreicht der Rotor einer Windenergieanlage seinen maximalen Leistungsbeiwert (fester Rotorkennwert). Daher liegt bei einer entsprechenden Auslegungsschnelllaufzahl eines Rotorblatts eine entsprechende vorbestimmte Auslegungsanströmrichtung für jedes Profil vor.

In einer bevorzugten Weiterbildung des Rotorblatts wird vorgeschlagen, dass die Schnelllaufzahl des Rotorblatts zwischen 7 und 11 liegt.

Darüber hinaus ist weiterhin von Vorteil, wenn die Profile im inneren Bereich eine relative Dicke von mehr als 50 % aufweisen.

Außerdem zeichnen sich die Profile dadurch aus, dass die Tangente im Aufpunkt der Aufsatzanströmfläche im Wesentlichen parallel zur Auslegungsanströmrichtung ausgebildet ist.

Günstig ist es ferner, wenn der Endpunkt der Aufsatzanströmfläche bezogen auf die Anströmrichtung vor der Hinterkante des Rotorblatts endet.

Weiterhin sind insbesondere die Aufpunkte der Aufsatzanströmfläche bzw. der Aufsatzvorrichtung von innen nach außen, d.h. entlang der Längsachse, kontinuierlich verbunden. Ferner sind die Endpunkte der Aufsatzvorrichtung von innen nach außen kontinuierlich verbunden, so dass die Aufsatzvorrichtung als eine Art Bauteil oder Körper ausgebildet ist.

Eine gekrümmte räumliche Struktur der Aufsatzvorrichtung ergibt sich, wenn sich der Abstand der Endpunkte oder der Abreißpunkte der Aufsatzanströmfläche (bzw. der Aufsatzvorrichtung) von der Vorderkante des Rotorblatts entlang der Längsachse von innen nach außen zumindest in einem Längsachsenabschnitt vergrößert. Hierdurch wird eine Art gekrümmte Aufsatzvorrichtung oder eine Art Spoilereinrichtung mit einer nach innen zurücklaufenden d.h. zur Hinterkante gebogenen Konstruktion ausgebildet, wobei die nach innen zur Hinterkante ausgebildete Krümmung der Aufsatzvorrichtung sich durch die Verdrehung der Anströmrichtung ergibt.

Dazu ist weiter vorgesehen, dass die Aufsatzvorrichtung nach Art eines Spoilers mit einer Luftleitfläche in Form der Aufsatzanstömfläche ausgebildet ist, wodurch die Energieeffizienz des Rotorblatts im inneren Bereich gesteigert wird.

Des Weiteren ist es von Vorteil, wenn die Aufsatzvorrichtung auf das Rotorblatt geklebt wird oder ist. Hierbei kann die Aufsatzvorrichtung nachträglich nach Herstellung des Rotorblatts im inneren Bereich auf der Druckseite angeordnet werden. Dementsprechend ist insbesondere die Aufsatzvorrichtung nachrüstbar oder nachgerüstet. In der Praxis hat dies vorteilhafterweise zur Folge, dass gar keine oder keine signifikante Erhöhung der Anlagenbelastung im Vergleich zu den Lastannahmen des Auslegungsverfahrens stattfind et.

In einer bevorzugten Ausgestaltung ist es ferner möglich, dass die Aufsatzvorrichtung von einer Ruheposition in eine Arbeitsposition gebracht wird oder ist. Hierbei kann beispielsweise die Anströmfläche der Aufsatzvorrichtung entsprechend eingestellt oder bei entsprechender Windlast eingefahren werden, wodurch die Aufsatzanströmfläche der Aufsatzvorrichtung eng am üblichen Profil des Rotorblatts anliegt.

Außerdem ist es in einer Weiterbildung bevorzugt, wenn der Endpunkt der Aufsatzanströmfläche als Strömungsabreißpunkt auf der Druckseite des Profils ausgebildet ist.

Ferner wird die Aufgabe gelöst durch eine Windenergieanlage, die mit wenigstens einem Rotorblatt, wie voranstehend beschrieben, ausgerüstet ist.

Eine weitere Lösung der Aufgabe besteht in einer Verwendung einer Aufsatzvorrichtung, die in einem inneren Bereich eines erfindungsgemäßen, voranstehend beschriebenen Rotorblatts angeordnet wird oder ist.

Außerdem wird die Aufgabe gelöst durch ein Verfahren zur Herstellung eines Rotorblatts einer Windenergieanlage, wobei eine Aufsatzvorrichtung im inneren Bereich eines Rotorblatts angeordnet wird, so dass das Rotorblatt in einer Ausführungsform gemäß den oben genannten Möglichkeiten ausgebildet ist. Zur Vermeidung von Wiederholungen wird auf die voranstehenden Ausführungen zu dem oben beschriebenen Rotorblatt ausdrücklich verwiesen.

Die Erfindung wird nachfolgend anhand von Ausführungsbeispielen exemplarisch beschrieben, wobei bezüglich aller im Text nicht näher erläuterten erfindungsgemäßen Einzelheiten ausdrücklich auf die Zeichnungen verwiesen wird. Es zeigen:
- Fig. 1: überlagerte Profilschnitte eines erfindungsgemäßen Rotorblatts;
- Fig. 2: überlagerte Profilschnitte eines weiteren erfindungsgemäßen Rotorblatts;
- Fig. 3: eine perspektivische Darstellung eines Rotorblatts im inneren Bereich mit einer erfindungsgemäßen Aufsatzvorrichtung;
- Fig. 4a bis 4d: jeweils Profilschnitte eines erfindungsgemäßen Rotorblatts und
- Fig. 5: einen Profilschnitt eines weiteren erfindungsgemäßen Rotorblatts.

In den folgenden Figuren sind jeweils gleiche oder gleichartige Elemente bzw. entsprechende Teile mit denselben Bezugsziffern versehen, so dass von einer entsprechenden erneuten Vorstellung abgesehen wird.

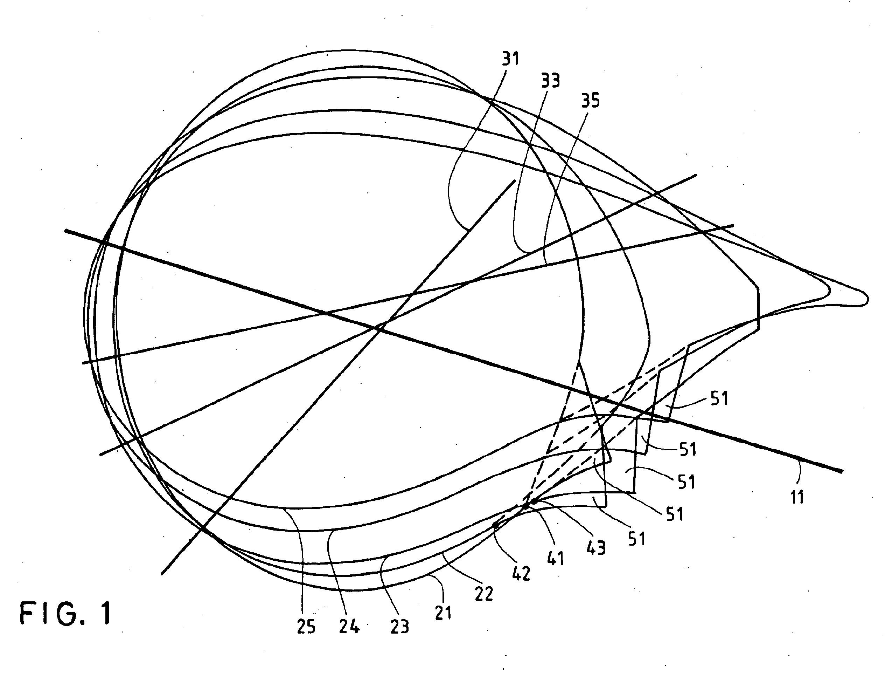

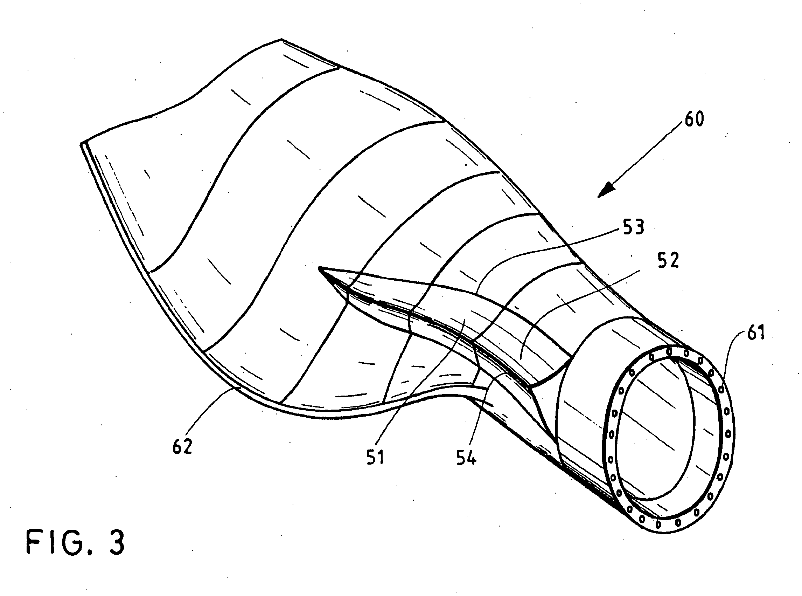

In Fig. 1 sind mehrere überlagerte Profilschnitte 21, 22, 23, 24, 25 eines Rotorblatts 60 (vgl. Fig. 3) von der Rotorblattwurzel in inneren Bereich zum äußeren Bereich dargestellt. Das innerste Profil 21 weist in diesem Beispiel die größte relative Dicke aus. Das Profil 25 ist mit einer relativen Dicke von 45 % das dünnste Profil im inneren Bereich. Die überlagerten Profilschnitte 21, 22, 23, 24, 25 geben einen Profilverlauf eines Rotorblatts in verschiedenen Abschnitten wieder. Aus Gründen der Übersichtlichkeit wurde von der Darstellung von Profilen mit einer relativen Dicke von weniger als 30 % im äußeren Bereich abgesehen.

Darüber hinaus ist in Fig. 1 mit dem Bezugszeichen 11 die Rotorebene in einer vorbestimmten Betriebsstellung des Rotorblatts eingezeichnet. Die verschiedenen Profilschnitte 21, 22, 23, 24, 25 sind entlang einer Auffädelachse von der Rotorblattwurzel nach außen zur Rotorblattspitze aufgefädelt.

Aus Fig. 1 geht hervor, dass die relative Dicke der Profilschnitte 21 bis 25 von innen (Profil 21) nach außen (Profil 25) abnimmt. Das heißt, dass das Profil 21 im inneren Bereich näher an der Rotorblattwurzel als die nachfolgenden Profilschnitte 22 bis 25 angeordnet ist.

Entsprechend zum (inneren) Profilschnitt 21 ist in Fig. 1 die dazugehörige vorbestimmte Auslegungsanströmrichtung 31 eingezeichnet. Darüber hinaus sind für die Profile 23, 25 die entsprechenden jeweiligen Auslegungsanströmrichtungen 33, 35 eingezeichnet. Überdies sind in Fig. 1 für die Profilschnitte 21, 22, 23 jeweils die Aufpunkte 41, 42, 43 eines erfindungsgemäßen Aufsatzkörpers 51 als Aufsatzvorrichtung auf der Druckseite der Profile 21 bis 25 im Querschnitt dargestellt.

In Fig. 1 sind die Querschnitte des Aufsatzkörpers 51 an den jeweiligen Profilschnitten 21 bis 25 eingezeichnet, wobei der Querschnitt des Aufsatzkörpers 51 an den Profilschnitten 21 bis 25 jeweils nach Art eines Dreiecks oder dergleichen oder annähernd dreiecksförmig ausgebildet ist.

Der entsprechende Aufpunkt 41 bis 43 des Aufsatzkörpers 51 an den jeweiligen Profilen 21 bis 23 ist beispielsweise dadurch bestimmt, dass die Berührende im Aufpunkt 41 bis 43, d.h. die Tangente an das jeweilige Profil parallel oder mit einer geringen Neigung von ± 20°, insbesondere ± 15°, zur jeweiligen Auslegungsanströmrichtung 31, 33 und 35 des dazugehörigen Profilschnitts 21, 23 sowie 25 ausgebildet ist. Hierbei ist der Aufpunkt 41 bis 43 an dem Profil 21 bis 23 vor dem jeweiligen druckseitigen Strömungsabrisspunkt des entsprechenden Profils 21 bis 23 angeordnet.

Durch den nachträglich aufgebrachten bzw. nachrüstbaren Aufsatzkörper 51 werden die Profileigenschaften des Rotorblatts 60 im inneren Bereich, d.h. im Bereich mit einer Profildicke von mehr als 30 %, insbesondere 50 %, verbessert, da mit dem Aufsatzkörper 51 eine Wölbungserhöhung auf der Druckseite des Rotorblatts 60 ausgebildet wird. Bevor die Strömung auf der Druckseite der Profile 21 bis 23 sich ablöst, wird durch die Aufsatzvorrichtung 51 auf der Druckseite eine Aufsatzanströmfläche (vgl. Fig. 3, Bezugszeichen 52) der Aufsatzvorrichtung bzw. des Aufsatzkörpers 51 ausgebildet, wodurch der Profilauftrieb des Rotorblatts im inneren Bereich und damit der Energieertrag verbessert werden. Ein etwas vergrößerter Profilwiderstand durch ein vergrößertes Totwassergebiet wird hierbei in Kauf genommen bzw. toleriert.

Aus den Profilschnitten 21 bis 25 geht ferner hervor, dass die Position des Aufsatzkörpers 51 mit seinen entsprechenden Aufpunkte 41 bis 43 sich von Profil zu Profil unterscheidet bzw. verändert, so dass zunächst im inneren Profilschnitt 21 zum nächsten benachbarten Profilschnitt 22 der Aufpunkt 41 in der Projektion entlang der Auffädelachse hinter dem Aufpunkt 42 des nachfolgenden äußeren Profilschnitts 22 liegt.

Mit zunehmendem Rotorblattradius liegen die Aufpunkte 43 und die weiteren Aufpunkte, die aus Gründen der Übersichtlichkeit nicht bezeichnet sind, zunehmend mehr von der vorderen Profilkante entfernt. Das heißt, dass der Abstand zwischen den Aufpunkten 42, 43 und den weiter außen liegenden Aufpunkten und der Vorderkante des entsprechenden Profils sich vergrößert.

Darüber hinaus vergrößert sich die Winkelposition der Aufpunkte 41, 42, 43 mit größer werdendem Rotorradius, wobei die Winkelpositionen bezogen auf die Rotorblattebene um die Rotorblattlängsachse gemessen werden.

Die Länge der Aufsatzvorrichtung 51 entlang der Auffädelachse oder einer anderen vorbestimmten Achse wird in Abhängigkeit der Länge des Rotorblatts festgelegt. Je nach Schlankheit des Rotorblattes kann die Länge der Aufsatzvorrichtung etwa 15% bis 25% der Rotorblattlänge betragen. Das bedeutet, dass bei einer Windenergieanlage mit einer Leistung von 1,5 MW und einer Rotorblattlänge von 37 m die Länge der Aufsatzvorrichtung beispielsweise 5,5 m beträgt, bei einer Windenergieanlage mit einer Leistung von 2 MW und einer Rotorblattlänge von 45 m die Länge der Aufsatzvorrichtung beispielsweise 7 m beträgt und bei einer Windenergieanlage mit einer Leistung von 5 MW und einer Rotorblattlänge von 61 m sowie einer schlanken Blattgeometrie die Länge der Aufsatzvorrichtung beispielsweise 15,5 m (bei relativ dicken Profilen) beträgt.

Die Querschnittsform der Aufsatzvorrichtung 51 ist dabei nicht entscheidend, die Dreiecksform ist insbesondere aus strukturellen Gründen besonders vorteilhaft. Bei bekannten Windenergieanlagen mit bereits installierten Rotorblättern ist die Aufsatzvorrichtung 51 nachrüstbar, da in der Praxis keine Erhöhung der Anlagenbelastung im Vergleich zu den hohen Lastannahmen des Auslegungsverfahrens entsteht.

Hierbei liegt die Erkenntnis zugrunde, dass die mit einfachen Berechnungsverfahren vorhergesagten sowie theoretisch ermittelten Auftriebsbeiwerte im Rotorblattinnenbereich real nicht erreicht werden. Mit der erfindungsgemäßen Aufsatzvorrichtung werden die Profileigenschaften eines Rotorblatts so verbessert, dass die ursprünglichen Annahmen auch in der Praxis erreicht werden.

Die Geometrie einer vorteilhaften Positionierung der Aufsatzvorrichtung 51 ist beispielhaft für ein Rotorblatt mit einer Länge von 37 m in der Figur 1 gezeigt. Neben den Auslegungsanströmrichtungen für einen Radius (von der Rotornabe) von 2.8 m (Profil 21), 4 m (Profil 22), 5 m (Profil 23), 6 m (Profil 24) und 7 m (Profil 25) ist auch die Rotorebene 11 eingetragen.

Es ist zu erkennen, dass die Position der Aufsatzvorrichtung 51 mit zunehmendem Rotorradius von der Blattvorderkante weg nach hinten wandert. Der absolute Abstand des Abreißpunktes als Referenzpunkt der Aufsatzvorrichtung 51 zur jeweiligen Blattvorderkante vergrößert sich. Eine Ausnahme bildet lediglich der innerste Profilschnitt 21 bei einem Radius vom 2.8 m.

Bezogen auf die Rotorblattebene 11 ergeben sich folgende Winkelpositionen der Aufsatzvorrichtung gemessen um die Rotorblattlängsachse:

| Profil | Radius [m] | relative Blattlänge [%] | Winkelposition Aufsatzvorrichtung |
|---|---|---|---|
| 21 | 2,8 | 8 | 169° |
| 22 | 4 | 11 | 162° |
| 23 | 5 | 13,5 | 167° |
| 24 | 6 | 16 | 174° |
| 25 | 7 | 19 | 180° |

Es ist zu erkennen, dass für die inneren Profile ab einem vorbestimmten Profil die Winkelposition der Aufsatzvorrichtung mit größer werdendem Rotorradius zunimmt. Beim Übergang von dem innersten Profil 21 (Radius 2.8 m) zum nächsten Profil 22 (Radius 4 m) nimmt die Winkelposition der Aufsatzvorrichtung 51 leicht ab.

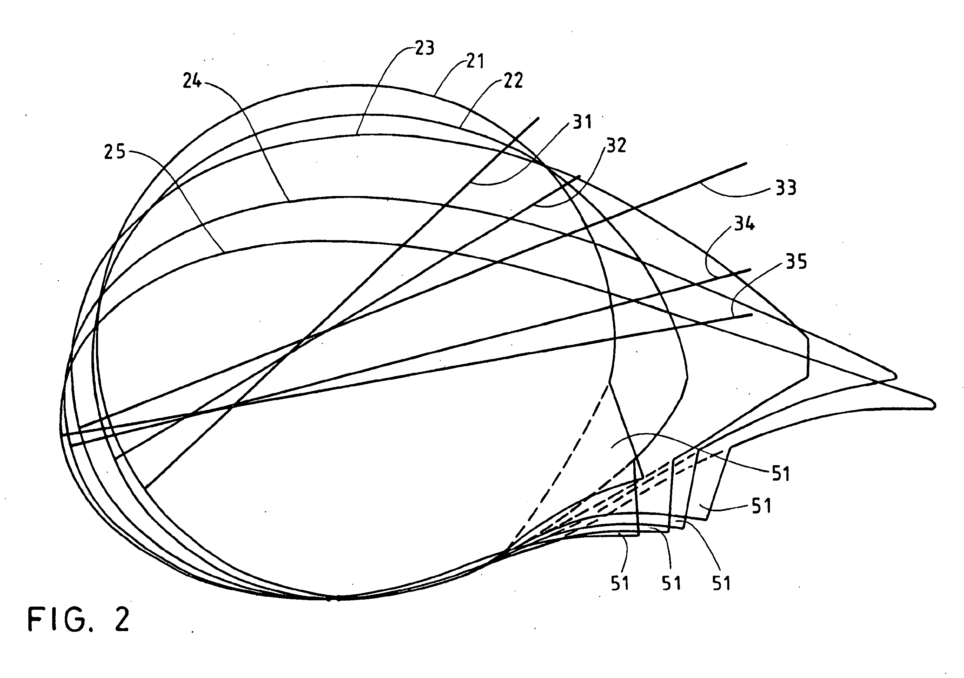

In Fig. 2 ist eine weitere bevorzugte Ausführungsform für ein Rotorblatt dargestellt, bei der die Profile 21 bis 25 asymmetrisch auf der Blattlängsachse bzw. Auffädelachse angeordnet sind. Hierdurch wird der Blattfreigang vor einem Turm einer Windenergieanlage entsprechend vergrößert. Die entsprechenden Auslegungsanströmrichtungen 31 bis 35 sind zu den zugehörigen Profilschnitten 21 bis 25 ebenfalls jeweils eingezeichnet.

Die Höhe der Aufsatzvorrichtung 51 beträgt in den Ausführungsbeispielen in Fig. 1 und Fig. 2 im Kreiszylinderbereich des Rotorblatts ca. 10 % des Zylinderdurchmessers, im Bereich einer Profildicke von 45 % ca. 8 % der Profildicke. Mit größerer Höhe der Aufsatzvorrichtung 51 wird die aerodynamische Wirksamkeit zunehmen, wobei bei den Ausführungsformen darauf zu achten ist, dass ein guter Kompromiss für den Bauaufwand für eine zusätzliche Aufsatzvorrichtung 51 und die Zusatzbelastung für ein Rotorblatt sowie die damit zu erzielende Ertragssteigerung erreicht wird.

In den Ausführungsbeispielen in Fig. 1 und 2 ist erkennbar, dass die Aufsatzvorrichtung 51 im inneren bereich (Profil 21) zur Hinterkante des Profils zurück läuft. Da im inneren Bereich die Anströmung stark dreht, wird der Kreiszylinder des Rotorblatts mit der Aufsatzvorrichtung 51 ebenfalls entgegen dem Uhrzeigersinn gedreht, wodurch die Position der Aufsatzvorrichtung 51 nach oben wandert. Durch diese Rückdrehung ergibt sich eine insgesamt gebogene oder gekrümmte Form der Aufsatzvorrichtung 51 entlang der Auffädelachse des Rotorblatts.

Alternativ sieht eine bevorzugte Ausführungsform vor, auf das Rückdrehen der Aufsatzvorrichtung im Innenbereich zu verzichten. Dies ist hinsichtlich des Energieertrags geringfügig schlechter, ermöglicht aber eine sehr einfache, im Wesentlichen gerade Geometrie der Aufsatzvorrichtung und somit eine einfache Bauausführung.

Dadurch, dass durch die Aufsatzvorrichtung 51 eine Aufsatzanströmfläche im inneren Bereich eines Rotorblatts vorliegt, wird die Effizienz des Rotorblatts in der Nähe des Rotorblattsanschlusses in seiner Energieausbeute gesteigert. Hierdurch wird eine energieertragsoptimierte Ausführung eines Rotorblatts ermöglicht. Beispielsweise kann die Aufsatzvorrichtung 51 in Form eines Spoilers bei der Herstellung der Rotorblätter angeordnet werden, so dass keine komplette Änderung des Herstellungsvorgangs eines Rotorblatts durchgeführt werden muss.

Als geeignetes Material zur Herstellung einer Aufsatzvorrichtung 51 eignet sich beispielsweise glasfaserverstärkter Kunststoff (GFK). Im Abreißpunkt, d.h. am Endpunkt der Anströmfläche bzw. der Aufsatzanströmfläche der Aufsatzvorrichtung 51 ist bevorzugt, eine scharfe Kante als Endkante auszubilden. An der Innenseite im Bereich der scharfen Endpunkte der Aufsatzvorrichtung 51 im Bereich der Endkante ist die Ecke aus Festigkeitsgründen vorteilhafterweise abgerundet. Dadurch ergibt sich an der Aufsatzvorrichtung eine sehr hohe Festigkeit bei einem geringen Gewicht der Aufsatzvorrichtung.

Hierbei ist es von Vorteil, wenn die Aufsatzvorrichtung 51 in Richtung der Blattlängsachse vergleichsweise elastisch ausgeführt ist, d.h., dass dadurch sehr hohe Dehnungen in Längsrichtung in einem Toleranzbereich liegen.

In weiteren Ausführungsformen ist vorgesehen, dass die Aufsatzvorrichtung in eine Arbeitsposition gebracht wird. Hierbei ist die Aufsatzvorrichtung aktivierbar ausgebildet, um bei Windgeschwindigkeiten unterhalb der Nenngeschwindigkeit bei eingeschalteter oder zugeschalteter Aufsatzvorrichtung 51 den Energieertrag zu steigern. Bei hohen Windgeschwindigkeiten wird durch Einklappen bzw. Einfahren oder Abschalten der Aufsatzanströmfläche bzw. der Aufsatzvorrichtung 51 die Belastung des Rotorblatts reduziert, indem die Aufsatzanströmfläche eng am normalen Rotorblattprofil anliegt.

Insbesondere eignet sich zum Einschalten bzw. Zuschalten der Aufsatzvorrichtung ein Luftsack im Innern der Vorrichtung, wodurch das innere Volumen der Aufsatzvorrichtung verringert oder vergrößert wird, so dass sich unterschiedliche Anstellwinkel der Aufsatzvorrichtung 51 in Bezug auf die Druckseite des Rotorblatts ergeben. Insbesondere wird durch den Luftsack oder eine andere schaltbare Einrichtung die Aufsatzvorrichtung 51 von einer Ruheposition in eine Arbeitsposition gebracht, wobei dieser Vorgang reversibel ausgebildet ist.

In Fig. 3 ist ferner eine perspektivische Ansicht eines inneren Bereichs eines Rotorblatts 60 in einer perspektivischen Darstellung dargestellt. Das Rotorblatt 60 verfügt über einen kreisförmigen Rotorblattanschluss 61. Im Anschluss an den runden Kreisquerschnitt des Rotorblatts 60 schließt sich im Vorderkanten abgewandten Bereich der Aufsatzkörper 51 an, der nach Art eines Spoilers auf der Druckseite des Rotorblatts 60 angeordnet ist.

Auf der Rückseite des Rotorblatts 60 setzt oberhalb des Rotorblattanschlusses 61 die Hinterkante 62 an. Der Aufsatzkörper 51 verfügt über eine Aufsatzanströmfläche 52, wobei beim Übergang von der normalen Strömungsfläche des Rotorblatts 60 zur Aufsatzanströmfläche 52 die entsprechenden Aufpunkte der Profile liegen. Die eingezeichnete Linie 53 bildet somit eine Art Verbindungslinie der Aufpunkte. Die Aufsatzanströmfläche 52 der Aufsatzvorrichtung 51 wird durch die Verbindungslinie 54 der Aufsatzanströmfläche 52 begrenzt. Entlang der Verbindungslinie 54 sind die Endpunkte der Aufsatzanströmfläche 52.

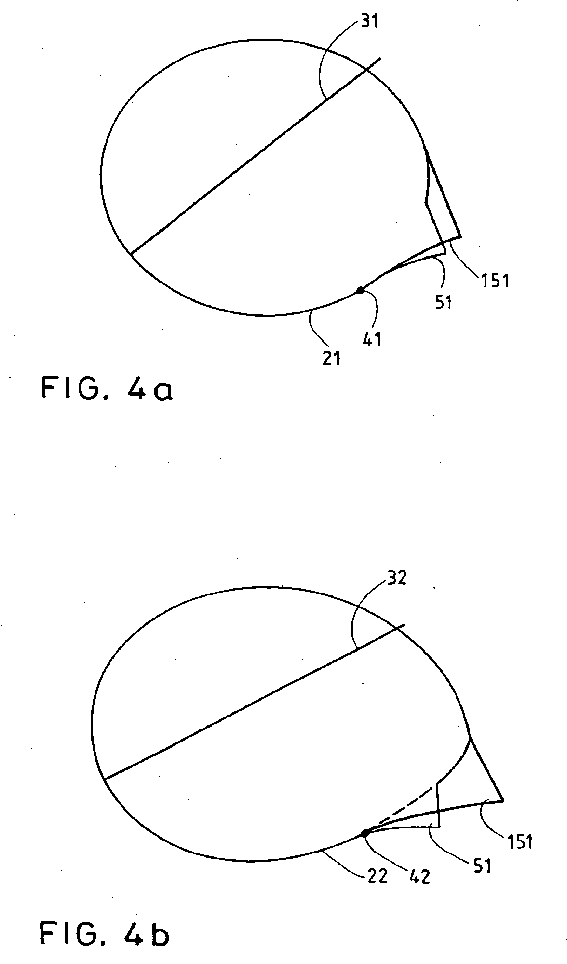

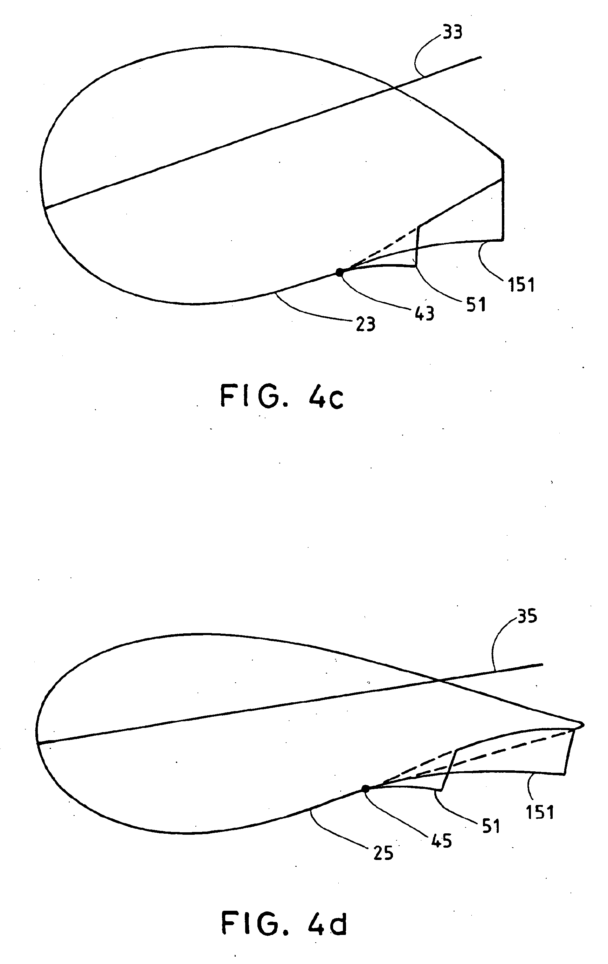

In den Figuren 4a bis 4d sind vorteilhafte Ausbildungsformen einer Aufsatzvorrichtung 51 bzw. modifizierte Profile aus Fig. 1 gezeigt. Die eingezeichneten Profile 21, 22, 23, 25 entsprechen dabei den in Fig. 1 gezeigten Profilschnitten. Die modifizierten Profilschnitte 21, 22, 23, 25 weisen in diesem Ausführungsbeispiel eine sehr hohe aerodynamischer Güte auf, so dass die Energieausbeute eines Rotorblatts im inneren Rotornaben nahen Bereich maximiert wird oder ist. Hierdurch ergibt sich im Hinblick auf den erzielbaren zusätzlichen Energieertrag eine optimierte Aufsatzvorrichtung 151 (im Vergleich zu der anderen Aufsatzvorrichtung 51 (vgl. Fig. 1 oder Fig. 2).

Es ist in den Figuren 4a bis 4d jeweils in dieser Darstellung die Lage der Aufpunkte der einzelnen Profilschnitte 21, 22, 24, 25 sowie die lokale Anströmrichtung 31, 32, 33 und 35 gut zu erkennen. Fig. 4a bis. 4c zeigen sehr deutlich, dass die Profilkontur bei den dicken Profilen im Bereich des Aufpunkts 41, 42, 43 im Wesentlichen parallel zur Anströmrichtung liegt.

Nur der ganz außen liegende Profilschnitt 25 in Fig. 4d zeigt eine schon etwas größere Abweichung der Profilkontur im Aufpunkt 45 von der Anströmrichtung (ca. 12°). Das dort im Außenbereich der Aufsatzvorrichtung 151 liegende, schon etwas dünnere Profil ermöglicht der Strömung bereits einen geringen Druckanstieg durch eine zurücklaufende Profilkontur zu ertragen. Hierdurch ist erst kurz vor dem potentiellen Abreißpunkt der Aufpunkt 45 der Aufsatzvorrichtung 151 positioniert, wobei die Profilkontur durch die Aufsatzvorrichtung 151 nach außen gezogen wird, so dass die Strömung erst wesentlich weiter hinten am Abreißpunkt der Aussatzvorrichtung 151 abreißt.

Die energieertragsoptimierte Ausführung der Aufsatzvorrichtung 151 weist eine noch stärkere Verschiebung des Abreißpunktes von der Blattvorderkante weg auf als die Geometrie der in Fig. 1 und 2 gezeigten Ausführung. Allerdings ist der Bauaufwand für eine derartige Ausatzvorrichtung hoch.

Eine derartige Aufsatzvorrichtung ist insbesondere dann sehr sinnvoll, wenn Rotorblätter gleich bei der Herstellung verbessert werden sollen, wobei keine komplett neue Rotorblattform gebaut werden muss. Die dargestellte Aufsatzvorrichtung kann auf einfache Weise an einem vorhandenen Rotorblatt montiert werden.

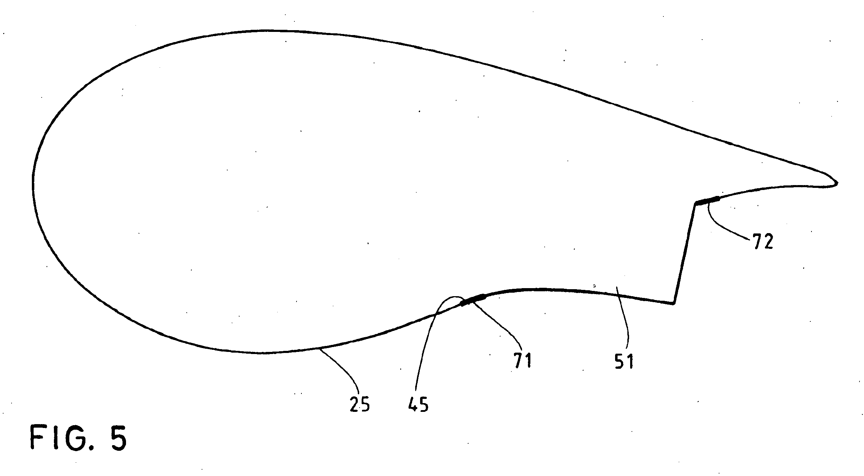

Fig. 5 zeigt die Ausführung einer Aufsatzvorrichtung 51 mit Klebelaschen 71, 72 im Querschnitt an einem Profil. Bei einem Rotorblatt mit einer Länge von 37 m und einer Länge der Aufsatzvorrichtung von etwa 5,5 m erweisen sich Klebelaschen 71, 72 mit einer Breite von 50 bis 80 mm als vorteilhaft. Die Aufsatzvorrichtung 51 selbst ist aus 2 bis 4 mm dickem GFK (laminiertes Gewebe oder Faserspritz) gefertigt. Der Abreißpunkt ist zur Erzielung einer hohen aerodynamischen Güte als möglichst scharfe Ecke ausgeführt.

Der bei einer aufgeklebten Aufsatzvorrichtung 51 bzw. aufgeklebten Spoiler unvermeidliche Kontursprung im Aufpunkt 45 sollte möglichst klein gehalten werden, maximal 5 mm, insbesondere 2 bis 3 mm. Zur Widerstandsregulierung ist eine Ausrundung mit Klebemasse (z.B. Sikaflex) von Vorteil.

In der Innenkontur wird diese Ecke aus Festigkeitsgründen vorteilhaft etwas ausgerundet. Durch den Dreiecksquerschnitt ergibt sich für die aufgeklebte Aufsatzvorrichtung 51 eine sehr hohe Festigkeit bei geringem Gewicht.

### Bezugszeichenliste

| | |
|---|---|
| 11 | Rotorebene |
| 21 | Profil |
| 22 | Profil |
| 23 | Profil |
| 24 | Profil |
| 25 | Profil |
| 31 | Auslegungsanströmrichtung |
| 32 | Auslegungsanströmrichtung |
| 33 | Auslegungsanströmrichtung |
| 41 | Aufpunkt |
| 42 | Aufpunkt |
| 43 | Aufpunkt |
| 51 | Aufsatzvorrichtung |
| 52 | Aufsatzanströmfläche |
| 53 | Linie |
| 54 | Verbindungslinie |
| 60 | Rotorblatt |
| 61 | Rotorblattanschluss |
| 62 | Hinterkante |
| 71 | Klebelasche |
| 72 | Klebelasche |
| 151 | Aufsatzvorrichtung |

## Patentansprüche

1. Rotorblatt (60) einer Windenergieanlage mit einer Oberseite (Saugseite) und einer Unterseite (Druckseite), wobei entlang einer Längsachse zwischen einer Rotorblattwurzel und einer Rotorblattspitze Profile (21, 22, 23, 24, 25) im Querschnitt mit einer Vorderkante und einer Hinterkante (62) ausgebildet sind, für jedes Profil (21, 22, 23, 24, 25) jeweils eine Auslegungsanströmrichtung (31, 32, 33, 34, 35) vorbestimmt ist und die Profile (21, 22, 23, 24, 25) im äußeren, der Rotorblattspitze zugewandten Bereich mit einer relativen Dicke von weniger als 30 % ausgebildet sind, **dadurch gekennzeichnet, dass** entlang der Längsachse im inneren, der Rotorblattwurzel zugeordneten Bereich an Profilen (21, 22, 23, 24, 25) mit einer relativen Dicke von mehr als 30 % auf der Druckseite eine Aufsatzvorrichtung (51), die eine Aufsatzanströmfläche (52) sowie einen der Vorderkante zugewandten Aufpunkt (41, 42, 43) der Aufsatzanströmfläche (52) und einen der Hinterkante (62) zugewandten Endpunkt der Aufsatzanströmfläche (52) aufweist, angeordnet ist, wobei der Aufpunkt (41, 42, 43) der Aufsatzanströmfläche (52) in einem Bereich zwischen der Vorderkante und der Hinterkante (62) der Profile (21, 22, 23, 24, 25) angeordnet ist, so dass die Tangente an das Profil (21, 22, 23, 24, 25) im Aufpunkt (41, 42, 43) in einem Winkelbereich zwischen +20° und -20°, insbesondere zwischen +15° und -15°, zur Auslegungsanströmrichtung (31, 32, 33, 34, 35) des Profils (21, 22, 23, 24, 25) ausgebildet ist.

2. Rotorblatt (60) nach Anspruch 1, **dadurch gekennzeichnet, dass** entlang der Längsachse im inneren, der Rotorblattwurzel zugeordneten Bereich an Profilen (21, 22, 23, 24, 25) mit einer relativen Dicke von mehr als 30 % auf der Druckseite eine Aufsatzvorrichtung (51), die eine Aufsatzanströmfläche (52) sowie einen der Vorderkante zugewandten Aufpunkt der Aufsatzanströmfläche (52) und einen der Hinterkante (62) zugewandten Endpunkt der Aufsatzanströmfläche (52) aufweist, angeordnet ist, wobei der Aufpunkt der Aufsatzanströmfläche (52) vor dem Ablösepunkt des das Rotorblatt (60) anströmenden Mediums auf der Druckseite ausgebildet ist.

3. Rotorblatt (60) nach Anspruch 1 oder 2, **dadurch gekennzeichnet, dass** die Tangente im Aufpunkt (41, 42, 43) im Wesentlichen parallel zur Auslegungsanströmrichtung (31, 32, 33, 34, 35) ausgebildet ist.

4. Rotorblatt (60) nach einem der Ansprüche 1 bis 3, **dadurch gekennzeichnet, dass** der Endpunkt der Aufsatzanströmfläche (52) vor der Hinterkante endet.

5. Rotorblatt (60) nach einem der Ansprüche 1 bis 4, **dadurch gekennzeichnet, dass** die Aufpunkte (53) der Aufsatzanströmfläche (52) von innen nach außen kontinuierlich verbunden sind.

6. Rotorblatt (60) nach einem der Ansprüche 1 bis 5, **dadurch gekennzeichnet, dass** die Endpunkte (54) der Aufsatzanströmfläche (52) von innen nach außen kontinuierlich verbunden sind.

7. Rotorblatt (60) nach einem der Ansprüche 1 bis 6, **dadurch gekennzeichnet, dass** der Abstand der Endpunkte (54) der Aufsatzanströmfläche (52) von der Vorderkante des Rotorblatts (60) entlang der Längsachse von innen nach außen sich vergrößert.

8. Rotorblatt (60) nach einem der Ansprüche 1 bis 7, **dadurch gekennzeichnet, dass** die Aufsatzvorrichtung (51) nach Art eines Spoilers (51) ausgebildet ist.

9. Rotorblatt (60) nach einem der Ansprüche 1 bis 8, **dadurch gekennzeichnet, dass** die Aufsatzvorrichtung (51) auf das Rotorblatt (60) geklebt wird oder ist.

10. Rotorblatt (60) nach einem der Ansprüche 1 bis 9, **dadurch gekennzeichnet, dass** die Aufsatzvorrichtung (51) nachrüstbar oder nachgerüstet ist.

11. Rotorblatt (60) nach einem der Ansprüche 1 bis 10, **dadurch gekennzeichnet, dass** die Aufsatzvorrichtung (51) von einer Ruheposition in eine Arbeitsposition gebracht wird oder ist.

12. Rotorblatt (60) nach einem der Ansprüche 1 bis 11, **dadurch gekennzeichnet, dass** der Endpunkt der Aufsatzanströmfläche (52) als Strömungsabreißpunkt ausgebildet ist.

13. Windenergieanlage mit wenigstens einem Rotorblatt (60) nach einem der Ansprüche 1 bis 12.

14. Verwendung einer Aufsatzvorrichtung (51), die in einem inneren Bereich eines Rotorblatts (60) nach einem der Ansprüche 1 bis 12 angeordnet wird oder ist.

15. Verfahren zur Herstellung eines Rotorblatts (60) einer Windenergieanlage, wobei eine Aufsatzvorrichtung (51) im inneren Bereich des Rotorblatts (60) angeordnet wird, so dass das Rotorblatt (60) nach einem der Ansprüche 1 bis 12 ausgebildet wird.

## Claims

1. A rotor blade (60) of a wind energy unit with an upper surface (suction side) and a lower surface (pressure side), wherein formed along a longitudinal axis between a rotor blade root and a rotor blade tip there are profiles (21, 22, 23, 24, 25) with a front edge and a rear edge (62) in cross-section, for each profile (21, 22, 23, 24, 25) a respective design-based direction of air flow (31, 32, 33, 34, 35) is predetermined and the profiles (21, 22, 23, 24, 25) are constructed in the outer region directed towards the rotor blade tip with a relative thickness of less than 30%, **characterised in that** arranged along the longitudinal axis in the inner region associated with the rotor blade root on profiles (21, 22, 23, 24, 25) with a relative thickness of more than 30% on the pressure side there is an attached device (51), which has an attached device inflow (52) and a start point, directed towards the front edge, of the attached device inflow surface (52) and an end point, directed towards the rear edge (62), of the attached device inflow surface (52), wherein the start point (41, 42, 43) of the attachment leading surface (52) is arranged in a region between the front edge and the rear edge (62) of the profiles (21, 22, 23, 24, 25) so that the tangent on the profile (21, 22, 23, 24, 25) in the start point (41, 42, 43) is formed in an angular range between +20° and -20°, particularly between +15° and -15°, to the design-based direction of air flow (31, 32, 33, 34, 35) of the profile (21, 22, 23, 24, 25).

2. A rotor blade (60) as claimed in Claim 1, **characterised in that** arranged along the longitudinal axis in the interior region, associated with the rotor blade root, on profiles (21, 22, 23, 24, 25) with a relative thickness of more than 30% on the pressure side is an attached device (51), which has an attached device inflow surface (52) and a start point, directed towards the front edge, of the attached device flow surface (52) and an end point, directed towards the rear edge (62), of the attached device inflow surface (52), wherein the start point of the attached device inflow surface (52) is constructed in front of the detachment point of the medium incident on the rotor blade (60) on the pressure side.

3. A rotor blade (60) as claimed in Claim 1 or 2, **characterised in that** the tangent in the start point (41, 42, 43) is formed substantially parallel to the design-based direction of air flow (31, 32, 33, 34, 35).

4. A rotor blade (60) as claimed in one of Claims 1 to 3, **characterised in that** the end point of the attached device inflow surface (52) terminates before the rear edge.

5. A rotor blade (60) as claimed in one of Claims 1 to 4, **characterised in that** the start points (53) on the attached device inflow surface (52) are continuously connected from the interior towards the exterior.

6. A rotor blade (60) as claimed in one of Claims 1 to 5, **characterised in that** the end points (54) on the attached device inflow surface (52) are continuously connected from the interior towards the exterior.

7. A rotor blade (60) as claimed in one of Claims 1 to 6, **characterised in that** the spacing of the end points on the attached device inflow surface (52) increases from the front edge of the rotor blade (60) along the longitudinal axis from the interior towards the exterior.

8. A rotor blade (60) as claimed in one of Claims 1 to 7, **characterised in that** the attached device (51) is constructed in the manner of a spoiler (51).

9. A rotor blade (60) as claimed in one of Claims 1 to 8, **characterised in that** the attached device (51) is secured to the rotor blade (60) by adhesive.

10. A rotor blade (60) as claimed in one of Claims 1 to 9, **characterised in that** the attached device (51) is retrofittable or retrofitted.

11. A rotor blade (60) as claimed in one of Claims 1 to 10, **characterised in that** the attached device (51) is moved from a rest position into a working position.

12. A rotor blade (60) as claimed in one of claims 1 to 11, **characterised in that** the end point on the attached device inflow surface (62) is constructed as a flow breakaway point.

13. A wind energy unit with at least one rotor blade (60) as claimed in one of Claims 1 to 12.

14. Use of an attached device (51), which is arranged in an inner region of a rotor blade (60) as claimed in one of Claims 1 to 12.

15. A method of producing a rotor blade (60) of a wind energy unit, wherein an attached device (51) is arranged in the inner region of the rotor blade (60) so that the rotor blade (60) is constructed in accordance with one of Claims 1 to 12.

## Revendications

1. Pale de rotor (60) d'une installation d'énergie éolienne comprenant un côté supérieur (côté aspiration) et un côté inférieur (côté refoulement), dans laquelle des profilés (21, 22, 23, 24, 25) sont formés dans la section avec une arête avant et une arête arrière (62) le long d'un axe longitudinal entre une racine de la pale de rotor et une pointe de la pale de rotor, une direction d'incidence de conception respective (31, 32, 33, 34, 35) est prédéfinie pour chaque profilé (21, 22, 23, 24, 25) et les profilés (21, 22, 23, 24, 25) sont réalisés, dans la zone extérieure dirigée vers la pointe de la pale de rotor, avec une épaisseur relative de moins de 30 %, **caractérisée en ce qu'**il est agencé le long de l'axe longitudinal, dans la zone intérieure correspondant à la racine de la pale de rotor sur les profilés (21, 22, 23, 24, 25) ayant une épaisseur relative de plus de 30 %, sur le côté refoulement, un dispositif de couronnement (51), qui présente une surface d'incidence du couronnement (52) ainsi qu'un point spatial mécanique (41, 42, 43) de la surface d'incidence du couronnement (52) dirigé vers l'arête avant et un point d'extrémité de la surface d'incidence du couronnement (52) dirigé vers l'arête arrière (62), étant entendu que le point spatial mécanique (41, 42, 43) de la surface d'incidence du couronnement (52) est agencé dans une zone comprise entre l'arête avant et l'arête arrière (62) des profilés (21, 22, 23, 24, 25) de telle sorte que la tangente avec le profilé (21, 22, 23, 24, 25) au niveau du point spatial mécanique (41, 42, 43) est formée dans une zone d'angle comprise entre +20° et -20°, en particulier entre +15° et -15°, par rapport à la direction d'incidence de conception (31, 32, 33, 34, 35) du profilé (21, 22, 23, 24, 25).

2. Pale de rotor (60) selon la revendication 1, **caractérisée en ce qu'**il est agencé le long de l'axe longitudinal, dans la zone intérieure correspondant à la racine de la pale de rotor sur les profilés (21, 22, 23, 24, 25) ayant une épaisseur relative de plus de 30 %, sur le côté refoulement, un dispositif de couronnement (51), qui présente une surface d'incidence du couronnement (52) ainsi qu'un point spatial mécanique de la surface d'incidence du couronnement (52) dirigé vers l'arête avant et un point d'extrémité de la surface d'incidence du couronnement (52) dirigé vers l'arête arrière (62), étant entendu que le point spatial mécanique de la surface d'incidence du couronnement (52) est formé avant le point de décollement de la substance incidente sur la pale de rotor (60) sur le côté refoulement.

3. Pale de rotor (60) selon la revendication 1 ou 2, **caractérisée en ce que** la tangente au niveau du point spatial mécanique (41, 42, 43) est réalisée sensiblement parallèlement à la direction d'incidence de conception (31, 32, 33, 34, 35).

4. Pale de rotor (60) selon l'une des revendications 1 à 3, **caractérisée en ce que** le point d'extrémité de la surface d'incidence du couronnement (52) se termine avant l'arête arrière.

5. Pale de rotor (60) selon l'une des revendications 1 à 4, **caractérisée en ce que** les points spatiaux mécaniques (53) de la surface d'incidence du couronnement (52) sont reliés de façon continue depuis l'intérieur vers l'extérieur.

6. Pale de rotor (60) selon l'une des revendications 1 à 5, **caractérisée en ce que** les points d'extrémité (54) de la surface d'incidence du couronnement (52) sont reliés de façon continue depuis l'intérieur vers l'extérieur.

7. Pale de rotor (60) selon l'une des revendications 1 à 6, **caractérisée en ce que** la distance entre les points d'extrémité (54) de la surface d'incidence du couronnement (52) et l'arête avant de la pale de rotor (60) augmente depuis l'intérieur vers l'extérieur le long de l'axe longitudinal.

8. Pale de rotor (60) selon l'une des revendications 1 à 7, **caractérisée en ce que** le dispositif de couronnement (51) est réalisé à la manière d'un déflecteur (51).

9. Pale de rotor (60) selon l'une des revendications 1 à 8, **caractérisée en ce que** le dispositif de couronnement (51) colle ou est collé sur la pale de rotor (60).

10. Pale de rotor (60) selon l'une des revendications 1 à 9, **caractérisée en ce que** le dispositif de couronnement (51) peut être monté ou est monté dans un rattrapage.

11. Pale de rotor (60) selon l'une des revendications 1 à 10, **caractérisée en ce que** le dispositif de couronnement (51) se déplace ou est déplacé depuis une position de repos vers une position de service.

12. Pale de rotor (60) selon l'une des revendications 1 à 11, **caractérisée en ce que** le point d'extrémité de la surface d'incidence du couronnement (52) est réalisé comme point de détachement de courant.

13. Installation d'énergie éolienne comprenant au moins une pale de rotor (60) selon l'une des revendications 1 à 12.

14. Utilisation d'un dispositif de couronnement (51) qui est agencé ou se trouve dans une zone intérieure d'une pale de rotor (60) selon l'une des revendications 1 à 12.

15. Procédé de fabrication d'une pale de rotor (60) d'une installation d'énergie éolienne, dans lequel un dispositif de couronnement (51) est agencé dans la zone intérieure de la pale de rotor (60) de telle sorte que la pale de rotor (60) est réalisée selon l'une des revendications 1 à 12.
